# EUROPEAN PATENT APPLICATION

(11) **EP 2 722 753 A1**
(43) Date of publication of application: **23.04.2014**
(21) Application number: 12306298.6
(22) Date of filing: 19.10.2012
(51) Int. Cl.: G06F 9/445

(54) **Method and device for improving the building of compositions of services**

(71) Applicant: Alcatel Lucent, 75007 Paris (FR)
(72) Inventor: Hacid, Hakim, 91620 Nozay (FR); Hebbar, Abdelkrim, 91620 Nozay (FR)
(74) Representative: Novagraaf Technologies

(57) **Abstract**

Embodiments provide a solution for building a composition of services, called mashup. Upon selecting a first service (S0), a second service or sequence of services (S7, S8 ; S9, S7, S8) of a database (302), adapted to be positioned directly upstream from said first service, is recommended. Said second service or sequence of services may be selected for composing (206) a mashup with said first service.

## Description

### TECHNICAL FIELD

The present invention relates generally to the field of compositions of services.

### BACKGROUND

In software engineering, creating a new service from scratch needs many programmers and implies heavy costs. In a Business-to-Business context, solutions such as Service-Oriented-Architecture (SOA) have been developed to simplify the creation of services by reusing existing services to build a new service based on the composition of said existing services. Such a composition of services, also called mashup, allows producing numerous and various services quickly.

Indeed, mashups aims at creating modular, scalable, composable and interoperable services which may be composed with each other to create a new service offering the desired functionalities.

Services composition is also useful to make services customisation according to end-users preferences. In other words, services composition provides end-users with personalized and user-centric services.

In particular, web services composition has been a key issue in service science and has been heavily investigated from both industrial and academic perspectives as demonstrated by the publication of Maurice H. ter Beek, Antonio Bucchiarone and Stefania Gnesi : "Web Service Composition Approaches: From Industrial Standards to Formal Methods", In ICIW, pages 15-20, 2007, and the publication of Y. Yuan, J.J. Wen, W. Li and B.B. Zhang: A Comparison of Three Programming Models for Telecom Service Composition, In AICT. IEEE Computer Society Washington, DC, USA, 2007.

From end-user perspective, semi-automatic services composition tools have been developed for providing end-users with an enhanced service creation environment. This environment offers support for automated processing of some composition tasks where the end-user operates in a more or less involved manner.

With a semi-automatic services composition tool as the one described in the publication of Abderrahmane Maaradji, Hakim Hacid, Ryan Skraba, Athena Vakali: "Social Web Mashups Full Completion via Frequent Sequence Mining". In IEEE SERVICES 2011: 9-16, the user is invited to compose by himself his mashup by selecting services, verifying compatibilities between input and output parameters, find the good services in a large list of services, etc. Furthermore said tool proposes to provide next services in the mashup construction with regard to a service selected by the user to begin his composition.

Nevertheless, in particular in the case of web services, there is a need to make the service composition process much more end-user oriented and to help the user building a composition of service whatever the service he chooses to start the creation with.

### SUMMARY

Embodiments described herein are able to help a user building a new mashup easily without having necessary to start his creation with the service intended to begin the chain of services forming said mashup.

Some embodiments provide a method for building a composition of services, called mashup, said method comprising the steps of:
- creating a database of sequences of services,
- selecting by a user, called building-user, a first service or sequence of services,
- analyzing sequences of services of said database with regard to said selected first service or sequence of services;
- recommending to said building-user at least one second service or sequence of services of said database which, in said database, is positioned directly upstream from said first service or sequence of services,
- selecting by the building-user one of said at least one recommended second service or sequence of services;
- building a mashup by composing said selected second service or sequence of services with said first service or sequence of services, said second service or sequence of services being positioned directly upstream from said first service or sequence of services.

In particular in the context of explosion of the number of services over the Web, suggesting such backward service or sequence of services for a given service or sequence of services selected as a starting point by the building-user, facilitates the services composition by said end-user whose technical skills may be limited.

In one aspect, each of said at least one recommended second service or sequence of services is recommended in function of the occurrence of said second service or sequence of services in the database.

In another aspect, wherein said building-user being connected to other users defining a social network, said other users using or creating mashups, each of said at least one recommended second service or sequence of services is recommended in function of a parameter related to said social network.

Suggesting backward services or sequences of services according to the occurrence, or frequency, of said backward services or sequences of services in other mashups indexed in the database and/or according to a social network parameter such as the proximity of the other users who use or have created said backward services or sequences of services, enable(s) to provide a relevant support for the end-user in order to create composed services. In particular, use of social network information enables to make personalized recommendations.

According to various embodiments, said database is established by decomposing a collection of existing mashups in sequences of services.

In one aspect, the step of analyzing the database comprises determining the potential service(s) or sequence(s) of services of said database compatible with said first service in an upstream direction, ranking said potential service(s) or sequence(s) of services according to at least one parameter related to a social network of the building-user and/or according to the occurrence of said potential service(s) or sequence(s) of services.

According to another aspect, the step of recommending at least one second service or sequence of services comprises recommending a list of ranked services and/or sequences of services in a predefined order.

In a further aspect, the step of recommending at least one second service or sequence of services comprises recommending a list of ranked services and/or sequences of services in a predefined order.

According to various embodiments, said method also comprises the steps of :
- recommending to said building-user at least one third service or sequence of services of said database which, in said database, is positioned directly downstream from said first service or sequence of services,
- selecting by the building-user one of said at least one third service or sequence of services;
- building said mashup by composing said selected third service or sequence of services with said first service or sequence of services, said selected second service or sequence of services being positioned directly downstream from said first service or sequence of services.

Thus, various embodiments of the invention allow users to support constructing powerful mashups of services without too much knowledge in the service science through an efficient analysis of the interactions, and innovative way for reasoning and considering both backward and forward recommendations.

In a particular aspect, each of said at least one recommended third service or sequence of services is recommended in function of the occurrence of said third service or sequence of services in the database.

In another aspect, wherein said building-user being connected to other users through a social network, said other users using or creating mashups, each of said at least one recommended third service or sequence of services is recommended in function of a parameter related to said social network.

Indeed, various embodiments of the invention offer an application allowing a full completion of services (mashups) using social networks for both backward and forward completion.

Various embodiments also propose a machine-executable program for performing a method as recited above, for building a composition of services.

Other embodiments also concern a device for building a composition of services, called mashup, said device comprising :
- means for creating a database of sequences of services,
- means for selecting by a user, called building-user, a first service or sequence of services,
- means for analyzing sequences of services of said database with regard to said selected first service or sequence of services;
- means for recommending to said building-user at least one second service or sequence of services of said database which, in said database, is positioned directly upstream from said first service or sequence of services,
- means for selecting by the building-user one of said at least one second service or sequence of services;
- means for building a mashup by composing said selected second service or sequence of services with said first service or sequence of services and wherein said second service or sequence of services is positioned directly upstream from said first service or sequence of services.

In a particular aspect, each sequence of services of said database is associated with its occurrence in the database.

In another particular aspect, each sequence of services of said database is associated with its user(s) in the database.

According to various embodiments, said device also comprises means for executing said mashup which includes said selected second service or sequence of services and said first service or sequence of services.

As a result, many embodiments of the invention propose to use social networks analysis combined with a sequence mining algorithm to provide the previous (backward or upstream) and next (forward and downstream) services in the mashup construction with regard to a service selected by the user to begin its composition. Such analysis of the interactions that happen in a mashup environment enable to recommend relevant backward and forward services or sequences of services among the many available ones.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

### BRIEF DESCRIPTION OF THE DRAWINGS

Some embodiments of apparatus and/or methods in accordance with embodiments of the present invention are now described, by way of example only, and with reference to the accompanying drawings, in which:
Figure 1 is a simplified schematic diagram illustrating an example of possible predecessors and successors of a service selected by a user to create a composition of services, according to an embodiment of the present invention ;
Figure 2 is a flow diagram illustrating a method for building mashups according to various embodiments of the invention;
Figure 3 is a schematic representation of the general architecture of a device according to various embodiments of the invention;
Figure 4 is a tree of services built on the basis of a collection of mashups whose services and sequences of services have been indexed according to various embodiments of the invention.
Figure 5 is a partial view of the tree of figure 3 showing users and frequency of use related to services and sequences of services composing said tree.

### DETAILED DESCRIPTION

Existing solutions put the hypothesis that the user who wants to create a composition of services, also called mashup, has selected the right starting service to build his mashup. Therefore, said existing solutions only propose possible successors services.

However, the initial step of choosing the right starting service is very difficult for a building-user who doesn't have a high knowledge in these technologies.

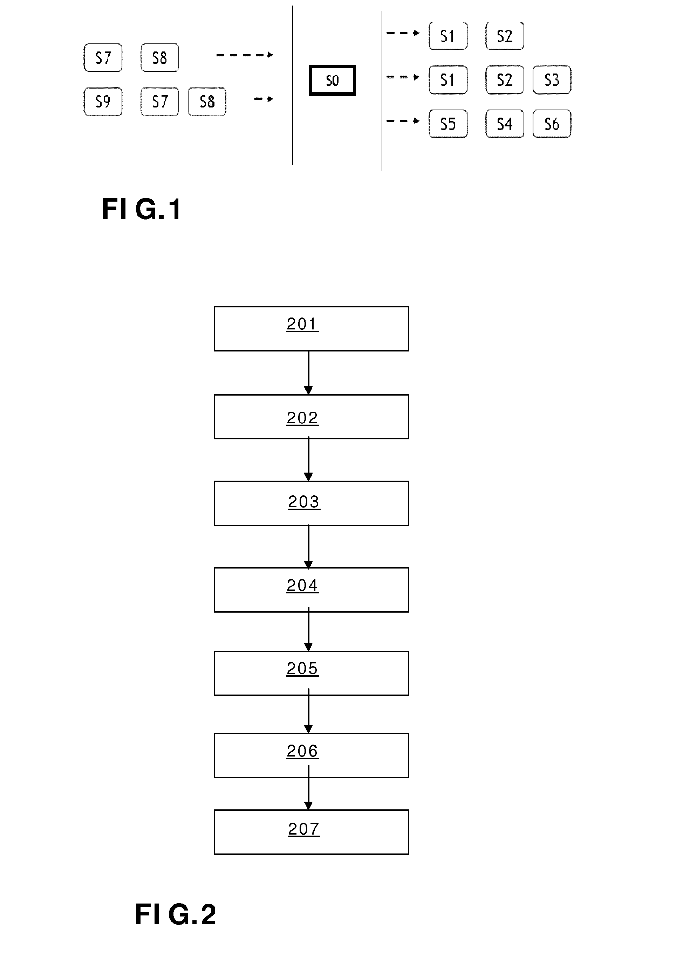

Figure 1 illustrates the general spirit and principle of various embodiments of the invention in the area of mashups completion. S0 is a selected service by the building-user.

S7, S8, and S9 are backward proposed services according to two possible sequences : S7-S8 and S9-S7-S8. Suggestion of backward services to the building-user helps him to complete his mashup with services required to optimize the functionalities of his mashup and gives the building-user the opportunity to start creating a mashup without necessary having to think about which is the first service really needed to compose the required function of the mashup.

Furthermore, various embodiments of the invention also propose forward services. In the example of figure 1, S1, S2, S3, S4, S5 and S6 are forward proposed services. In said example, there are three possible chains, or sequences, of services which are proposed: S1-S2 ; S1-S2-S3 and S5-S4-S6.

Each service or sequence of services comprises at least one input parameter and at least one output parameter. In a sequence of services, an upstream (or backward) service with regard to another service, is a service whose output parameter(s) correspond to (or may be used as) input parameter(s) of said another service. Similarly, a downstream (or forward) service with regard to another service, is a service whose input parameter(s) correspond to (or may use) output parameter(s) of said another service.

Each service may be considered as a functionality. Said service may be autonomous, i.e. functionally independent of any context or external service but capable of taking in input parameter(s) corresponding output parameter(s) of another service to enable interoperability of services of the composition between each others. Each service may itself be decomposed in operations constituting specific actions that the service may realize. In various embodiments, each service is a web service.

Thus, in the example of figure 1, when the user is creating a new composition of services and selects the service S0 to start creating its composition, a list of recommended upstream (or backward) sequence of services S7->S8, and S9->S7->S8 is proposed to the user. A list of recommended downstream (or forward) services or sequence of services S1->S2, and S1->S2->S3 and S5->S4->S6 is also proposed to said user. Said user then selects one of said downstream sequences of services and one of said upstream sequences of services to complete its composition of services given the current service S0 initially supplied.

Preferably, said proposed services or sequences of services are ranked according to embodiments detailed above. Services or sequence of services may be recommended in decreasing rank order. Ranking may take account of the occurrence of said service or sequence of services in the compositions used or created by said user or by other users.

As a result, many embodiments of the invention enable predicting the service or sequence of services which may precede the current service selected by a user in a mashup creation environment through a categorization of the services or sequence of services.

Thus, in various embodiments of the invention, the user is offered not only a forward support but also a backward support while constructing the mashup what leads to a more efficient recommendation of services and sequences of services.

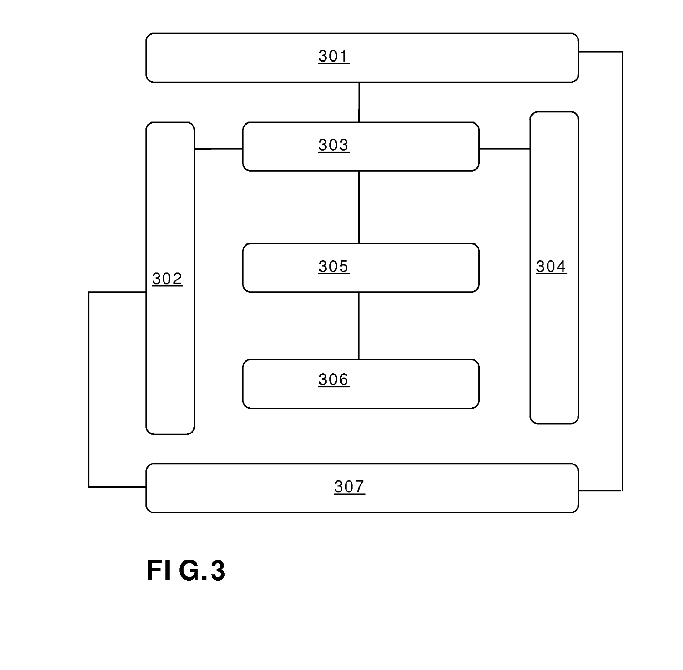

The general architecture of a device for building mashups according to various embodiments, is detailed above with respect to Figure 3.

According to various embodiments, said device includes a software application which comprises a sequence indexer module 305 for creating a database 302 of sequences of services (also called Service Repository). Said database may also comprise singles services which are then considered as sequences of one service.

The Sequences Indexer module 305 has two major functions:
(i) constructing a database containing all the potential services or sequences of services with their associated user(s), i.e. member(s) of the social network of the user, and their occurrence with regard to each of said associated user(s). Said services or sequences of services in the database are also provided with information corresponding to compatible backward or forward services or sequence of services to enable representing said services or sequences of service of the database under the form of a tree 4.
(ii) updating the tree of (backward and forward) sequences.

Thus, this module takes as input a set of compositions and their users and provides a tree representation of the sequences and the related users.

The device also includes a Mashup User Interface module 301 for selecting a first service or sequence of services. Said application also comprises an Interactions Monitor module and a Social Network Analyser module 304 for analyzing services and/or sequences of services of said database 302 with regard to said selected first service or sequence of services. The application also comprises a Completions Recommender 306 for recommending to said building-user services or sequence of services of said database 302 that may be positioned upstream from said selected first service or sequence of services to build the mashup required by the building-user. Mashup User Interface module 301 also enables selecting one of said second service or sequence of services.

Furthermore, various embodiments offer a friendly user interface from which the user can create and execute his composition of services as well as corresponding exportation for external use. In particular, services or sequences of services for building the mashups are selected by the building-user and recommended graphically with the help of a graphical environment which may include graphical representation of recommended services or sequences of services.

The functions performed by the various modules illustrated at figure 3 will be described in greater detail below in connection with the flow diagram of figure 2. Note that in various embodiments, certain steps may be performed in other order, and in some embodiments other steps may be added.

Starting with step 201, the database 302 of services and sequences of services is created by decomposing and indexing a collection of mashups.

Each mashup of length L, i.e. composed of a series of L services, is decomposed in sequence of service(s) of length K, K being a positive integer and varying from 1 to L while keeping the respective positions of services. When K = 1 said sequence of service is simply a service. Length L of a mashup is a positive integer that may be different from one mashup to another. Described embodiments may be generalized to any sequence of services of any length.

Said database 302 forms a Service Repository as explained above.

The building-user activity is intercepted and captured at the Mashup User Interface module 301. At step 202, said building-user realizes a first service or sequence of services selection, for instance according to a Drag & Drop type, from a list of available services memorized in the Service Repository 302. To this end, the Interactions Monitor 303 asks the Service Repository 302 to bring information related to the service or sequence of services selected by the building-user.

In parallel, the Social Network Analyzer module 304 checks a network associated to the user. Said network is a general social network including said user and other users. The Social Network Analyzer module 304 also enables attaching to each sequence of service(s) the occurrence of said sequence of service(s) in the database relatively to each individual user that is attached to said sequence of service(s).

At step 203, services and/or sequences of services of said database 302 are analyzed with regard to said selected first service or sequence of services. To this end, the Social Network Analyzer module 304 may infers from said social network of the user and from the selected service or sequence of services, a social network of said selected service or sequence of services. Said social network of said selected service or sequence of services includes a network of other services or sequences of services that may be used as backward and/or forward services or sequences of services for said selected service.

Thus, at step 204, Completions Recommender Module 306 takes as input the first service or sequence of services selected by the building-user, and consults a tree 4 of services and social network information (user and/or occurrence) formed upon database 302 as explained hereafter.

As a result, Completions Recommender Module 306 may recommend compatible service or sequence of services according to the occurrence of said service of sequence of services and/or according to the user(s) attached to said sequence of service(s).

The building-user then selects at step 205 a recommended backward and/or forward service or sequence of services so as to compose at step 206 his new mashup with said first selected service or sequence of services and said recommended and selected forward and/or backward service or sequence of services.

At step 207, a Mashup Execution Engine module 307, which is a generic module, has the role of executing said new mashup.

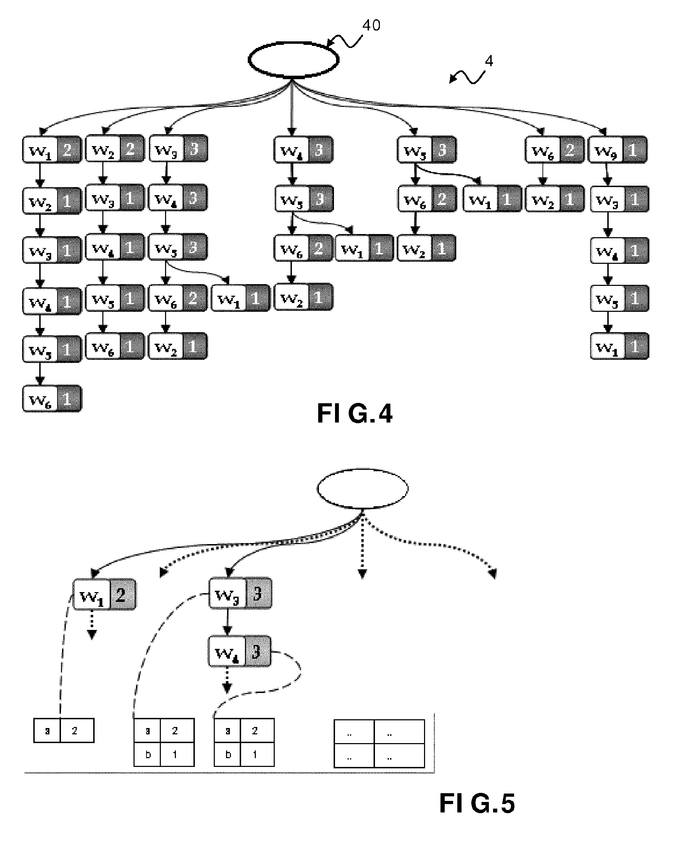

Decomposition of a collection of already created mashups into sequences of services (i.e. subsequences), and indexing them according to their occurrence and to their user, are realized with an algorithm that enables to reorganize said services and sequences of services in the form of a tree. An example of such a tree 4 is detailed hereafter according to figures 4 and 5 where w1 to w6 and w9 correspond to services.

Suppose that :
user 'a' creates a first mashup composed of the sequence of services :
   *w1-* >*w2-* >*w3-* >*w4-* >*w5-* >*w6,*
user 'b' creates a mashup composed of the sequence of services :
   *w3-* > *w4-* > *w5-* > *w6-* > *w2,*
user 'a' also creates a second mashup composed of the sequence of services:
   *w9-* > *w3-* > *w4-* > *w5-* > *w1,*

Considering the first mashup of user a', the algorithm decomposes said mashup by generating the following subsequences:
*(w1)*; *(w1* - > *w2); (w1* - > *w2* - > *w3); (w1* - > *w2* - > *w3* - > *w4); (w1* - > *w2* - > *w3* - > *w4* - > *w5); (w1* - > *w2* - > *w3* - > *w4* - > *w5* - > *w6); (w2); (w2 -* > *w3); (w2* - > *w3* - > *w4); (w2* - > *w3* - > *w4* - > *w5); (w2 -* > *w3* - > *w4* - > *w5* - > *w6); (w3); (w3* - > *w4); (w3* - > *w4* - > *w5); (w3* - > *w4* - > *w5* - > *w6); (w4); (w4* - > *w5); (w4* - > *w5 -* > *w6); (w5); (w5 -* > *w6); (w6).*

This process is repeated on the whole mashups and gives the tree illustrated in Figure 4. Reference 40 corresponds to the root of the tree 4. The number associated to a service or the last service of a sequence of services corresponds to the occurrence of said service or sequence of services. As illustrated by Figure 5 which refers to a part of the tree of figure 4, each of said service or sequence of services is associated with their user(s), 'a' and 'b' in the example of figures 4 and 5 and, for each user, the corresponding occurrence is attached to said service or sequence of services.

To illustrate the concept of the invention according to various embodiments, three users are considered: Alice, Bob, and Carol who compose services using a mashup creation environment. In order to find the definition of a word in English, translate it into French and then email it, Alice creates a mashup composed of services as follows: *Dictionary* - > *Translator - > Email.*

Moreover, in order to find the weather forecast, translate it and receive it by SMS, Alice creates a new mashup composed of services as follows:
*Weather -* > *Translator -* > *SMS.*

Alice also creates another composition of services which gets a geotag, transforms it into location, provides the weather of the location by sending an SMS. The corresponding mashup is composed of services as follows :
*Geotag -* > *MyLocation -* > *Weather -* > *SMS.*

On his side, Bob would like to create a mashup that finds the weather description from his holyday destination, sends it on his blog, and then posts a tiny URL of his blog on his Twitter profile. Thus, he creates the following mashups composed of services as follows:
*MyHolydayDestination -> Weather -> BlogPost -> tinyURL* -> *PostTwitter.*

Carol would like now to create a new mashup based on weather forecast service, but she is not sure on how building an efficient and interesting service.

Using the device as detailed at figure 3, once she selects the weather service through mashup user interface 301, completions recommender module 306 supports her by suggesting experience of other users under two forms :backward (preceding services of the Weather service) and forward (following services to the Weather service).

According to the services and sequence of services corresponding to the mashups indexed in the database 302, backward services or sequences of services compatible with the weather service may comprise:
*Mylocation;*
*MyHolydayDestination*
*Geotag* - > *MyLocation*

Indeed output parameter(s) of these services or sequence of services is (are) compatible with input parameter(s) of the selected starting service *Weather.*

However, to enable the building-user (Carol) that doesn't really have experience with these services, the system sorts the database by ranking potential services or sequences of services for composing the mashup downstream of the selected service, according to a specific parameter attached to said services or sequence of services of said database. Said parameter for ranking may be related to the occurrence of said potential services or sequences of services in the database.

According to various embodiments, said potential services or sequences of services may be ranked according to the link of proximity of the users attached to said potential services or sequence of services. Said link of proximity between two users may for instance be defined according to the interest in common of the users and/or be defined according to the number of users separating said two users. Identifying common interest of users according to said analyzed services comprises determining the frequency or occurrence of use of said service.

According to various other embodiments, the parameter for ranking potential services or sequences of services may be information included in a profile attached to said end-user. In this case, corresponding information, also called metadata, are attached to said services. For instance, such information may include the domain or category associated with the service such as science, sport, or business.

Obviously, said database may be sorted combining different types of parameters. Different and variable weight may be attributed to said parameters.

Following the example explained above, suppose that potential services or sequence of services are ranked in favor of services or sequence of services included in mashup associated to users related to the building-user.

If we also suppose that Carol is socially close to Alice, Carol will be recommended by the recommender module the service and sequence of services *Mylocation;* and *Geotag* - > *MyLocation* originating from Alice with a better rank than *MyHolydayDestination* originating from Bob. Indeed Carol may prefer a recommendation originating from Alice rather than from the whole community.

Suppose that Carol selected the recommended service *Mylocation.*

After selection, the recommended list is updated dynamically. In this example the list of backward recommended service is now reduced to the service *Geotag.*

Similarly, Recommender module 306 also proposes forward services or sequence of services. As explained above, a forward service corresponds to a service of other mashup for which output parameter or output parameters of selected service may be used as input parameter or input parameters for said forward service.

Forward services or sequences of services compatible with the weather service may comprise:
*SMS,*
*Translator;*
*Translator -* > *Email,*
*Translator -* > *SMS,*
*BlogPost -> tinyURL, and*
*BlogPost -* > *tinyURL* - > *PostTwitter.*

Indeed input parameter(s) of these services or sequence of services is (are) compatible with output parameter(s) of the selected starting service *Weather.*

Following the example, according to the selection of the Weather service by Carol and to ranking on the basis of the user(s) attached to services, recommender module may recommend the potential forward services or sequence of services *SMS; Translator; Translator-> SMS,* originating from Alice with a better rank than *BlogPost* -> *tinyURL, and BlogPost* - > *tinyURL* - > *PostTwitter.*

Suppose that Carol selected the service *Translator,* the recommended list is then updated dynamically, and, in this example, the list of forward recommended service is now reduced to the service *SMS.*

The process is incrementally updated until the building-user (Carol) decides to stop the construction or execute the constructed service.

The approach described above may also be very useful in the context of the Internet of things. In fact, the need for continuously composing services representing objects, habits, or social relatives, may be taken into account to provide a more interesting user experience when dealing with the expected huge number of objects and services representing them.

The increasing interest in the Internet of things makes various embodiments of the invention very suitable to enable people the combination of different services very easily and quickly thanks to powerful and exhaustive recommendations.

Thus, variant embodiments propose a new architecture for a service offered to general building-users who may interact at some stage either with web services or services representing objects in the area of the internet of things.

A person skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital storage media. The embodiments are also intended to cover computers programmed to perform said steps of methods described herein.

Although multiple embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

## Claims

1. A method for building a composition of services, called mashup, said method comprising the steps of :
- creating (201) a database (302) of sequences of services,
- selecting (202) by a user, called building-user, a first service (SO) or sequence of services,
- analyzing (203) sequences of services of said database (302) with regard to said selected first service (SO) or sequence of services;
- recommending (204) to said building-user at least one second service or sequence of services (S7, S8 ; S9, S7, S8) of said database (302) which, in said database, is positioned directly upstream from said first service or sequence of services,
- selecting (205) by the building-user one (S9, S7, S8) of said at least one recommended second service or sequence of services (S7, S8 ; S9, S7, S8);
- building a mashup by composing (206) said selected second service or sequence of services (S9, S7, S8) with said first service (SO) or sequence of services, said second service or sequence of services (S9, S7, S8) being positioned directly upstream from said first service (SO) or sequence of services.

2. The method of claim 1, wherein each of said at least one recommended second service or sequence of services (S7, S8 ; S9, S7, S8) is recommended in function of the occurrence of said second service or sequence of services in the database (302).

3. The method of any one of claims 1 or 2, wherein said building-user being connected to other users defining a social network, said other users using or creating mashups,
each of said at least one recommended second service or sequence of services (S7, S8 ; S9, S7, S8) is recommended in function of a parameter related to said social network.

4. The method of any one of claims 1 to 3, wherein said database (302) is established by decomposing a collection of existing mashups in services and sequences of services.

5. The method of any one of claims 1 to 4, wherein the step of analyzing (203) the database (302) comprises determining the potential service(s) or sequence(s) of services (S7, S8 ; S9, S7, S8) of said database (302) compatible with said first service or sequence of services in an upstream direction, ranking said potential service(s) or sequence(s) of services (S7, S8 ; S9, S7, S8) according to at least one parameter related to a social network of the building-user and/or according to the occurrence of said potential service(s) or sequence(s) of services.

6. The method of claim 5, wherein the step of recommending (204) at least one second service or sequence of services (S7, S8 ; S9, S7, S8) comprises recommending a list of ranked services and/or sequences of services in a predefined order.

7. The method of claim 6, wherein the step of selecting (205) comprises selecting a service or a sequence of services (S7, S8 ; S9, S7, S8) among said list of ranked service(s) and/or sequence(s) of services.

8. The method of any one of claims 1 to 7, wherein the method also comprises the steps of:
- recommending to said building-user at least one third service or sequence of services (S1, S2; S1, S2, S3; S5, S4, S6) of said database (302) which, in said database, is positioned directly downstream from said first service or sequence of services,
- selecting by the building-user one (S1, S2) of said at least one third service or sequence of services (S1, S2; S2, S2, S3; S5, S4, S6);
- building said mashup by composing said selected third service or sequence of services (S1, S2) with said first service (SO) or sequence of services, said selected second service or sequence of services (S1, S2) being positioned directly downstream from said first service (SO) or sequence of services.

9. The method of claim 8, wherein each of said at least one recommended third service or sequence of services (S1, S2; S2, S2, S3; S5, S4, S6) is recommended in function of the occurrence of said third service or sequence of services in the database.

10. The method of claim 9, wherein said building-user being connected to other users through a social network, said other users using or creating mashups,
each of said at least one recommended third service or sequence of services (S1, S2; S2, S2, S3; S5, S4, S6) is recommended in function of a parameter related to said social network.

11. Machine-executable program for performing a method according to any one of claims 1 to 10, for building a composition of services.

12. A device for building a composition of services, called mashup, said device comprising :
- means (305) for creating a database (302) of sequences of services,
- means (301) for selecting by a user, called building-user, a first service (SO) or sequence of services,
- means for analyzing (303, 304) sequences of services of said database (302) with regard to said selected first service (SO) or sequence of services;
- means for recommending (306) to said building-user at least one second service or sequence of services (S7, S8 ; S9, S7, S8) of said database (302) which, in said database, is positioned directly upstream from said first service or sequence of services,
- means for selecting (301) by the building-user one (S9, S7, S8) of said at least one second service or sequence of services (S7, S8 ; S9, S7, S8);
- means for building a mashup by composing said selected second service or sequence of services (S9, S7, S8) with said first service (SO) or sequence of services, and wherein said second service or sequence of services (S9, S7, S8) is positioned directly upstream from said first service (SO) or sequence of services.

13. The device of claim 12, wherein each sequence of services of said database (302) is associated with its occurrence in the database (302).

14. The device of claim 12 or 13, wherein each sequence of services of said database (302) is associated with its user(s) in the database (302).

15. The device of any one of claims 12 to 14, wherein said device also comprises means for executing said mashup which includes said selected second service or sequence of services (S7, S8 ; S9, S7, S8) and said first service (SO) or sequence of services.

## Amended claims

### Amended claims in accordance with Rule 137(2) EPC.

**1.** A method for building a composition of services, called mashup, said method comprising the steps of :
- creating (201) a database (302) of sequences of services,
- selecting (202) by a user, called building-user, a first service (S0) or sequence of services,
- analyzing (203) sequences of services of said database (302) with regard to said selected first service (S0) or sequence of services;
- recommending (204) to said building-user at least one second service or sequence of services (S7, S8 ; S9, S7, S8) of said database (302) which, in said database, is positioned directly upstream from said first service or sequence of services,
- selecting (205) by the building-user one (S9, S7, S8) of said at least one recommended second service or sequence of services (S7, S8 ; S9, S7, S8);
- building a mashup by composing (206) said selected second service or sequence of services (S9, S7, S8) with said first service (S0) or sequence of services, said second service or sequence of services (S9, S7, S8) being positioned directly upstream from said first service (S0) or sequence of services,
wherein each of said at least one recommended second service or sequence of services (S7, S8 ; S9, S7, S8) is recommended in function of the occurrence of said second service or sequence of services in the database (302).

**2.** The method of claim 1, wherein said building-user being connected to other users defining a social network, said other users using or creating mashups,
each of said at least one recommended second service or sequence of services (S7, S8 ; S9, S7, S8) is recommended in function of a parameter related to said social network.

**3.** The method of any one of claims 1 to 2, wherein said database (302) is established by decomposing a collection of existing mashups in services and sequences of services.

**4.** The method of any one of claims 1 to 3, wherein the step of analyzing (203) the database (302) comprises determining the potential service(s) or sequence(s) of services (S7, S8; S9, S7, S8) of said database (302) compatible with said first service or sequence of services in an upstream direction, ranking said potential service(s) or sequence(s) of services (S7, S8; S9, S7, S8) according to at least one parameter related to a social network of the building-user and/or according to the occurrence of said potential service(s) or sequence(s) of services.

**5.** The method of claim 4, wherein the step of recommending (204) at least one second service or sequence of services (S7, S8; S9, S7, S8) comprises recommending a list of ranked services and/or sequences of services in a predefined order.

**6.** The method of claim 5, wherein the step of selecting (205) comprises selecting a service or a sequence of services (S7, S8; S9, S7, S8) among said list of ranked service(s) and/or sequence(s) of services.

**7.** The method of any one of claims 1 to 6, wherein the method also comprises the steps of:
- recommending to said building-user at least one third service or sequence of services (S1, S2; S1, S2, S3; S5, S4, S6) of said database (302) which, in said database, is positioned directly downstream from said first service or sequence of services,
- selecting by the building-user one (S1, S2) of said at least one third service or sequence of services (S1, S2; S2, S2, S3; S5, S4, S6);
- building said mashup by composing said selected third service or sequence of services (S1, S2) with said first service (S0) or sequence of services, said selected second service or sequence of services (S1, S2) being positioned directly downstream from said first service (S0) or sequence of services.

**8.** The method of claim 7, wherein each of said at least one recommended third service or sequence of services (S1, S2; S2, S2, S3; S5, S4, S6) is recommended in function of the occurrence of said third service or sequence of services in the database.

**9.** The method of claim 8, wherein said building-user being connected to other users through a social network, said other users using or creating mashups,
each of said at least one recommended third service or sequence of services (S1, S2; S2, S2, S3; S5, S4, S6) is recommended in function of a parameter related to said social network.

**10.** Machine-executable program for performing a method according to any one of claims 1 to 9, for building a composition of services.

**11.** A device for building a composition of services, called mashup, said device comprising :
- means (305) for creating a database (302) of sequences of services,
- means (301) for selecting by a user, called building-user, a first service (S0) or sequence of services,
- means for analyzing (303, 304) sequences of services of said database (302) with regard to said selected first service (S0) or sequence of services;
- means for recommending (306) to said building-user at least one second service or sequence of services (S7, S8; S9, S7, S8) of said database (302) which, in said database, is positioned directly upstream from said first service or sequence of services,
- means for selecting (301) by the building-user one (S9, S7, S8) of said at least one second service or sequence of services (S7, S8; S9, S7, S8);
- means for building a mashup by composing said selected second service or sequence of services (S9, S7, S8) with said first service (S0) or sequence of services, and wherein said second service or sequence of services (S9, S7, S8) is positioned directly upstream from said first service (S0) or sequence of services,
wherein each sequence of services of said database (302) is associated with its occurrence in the database (302) and wherein said means for recommending (306) are configured to recommend each of said at least one recommended second service or sequence of services (S7, S8; S9, S7, S8) in function of the occurrence of said second service or sequence of services in the database (302).

**12.** The device of claim 11, wherein each sequence of services of said database (302) is associated with its user(s) in the database (302).

**13.** The device of claim 11 or 12, wherein said device also comprises means for executing said mashup which includes said selected second service or sequence of services (S7, S8; S9, S7, S8) and said first service (S0) or sequence of services.
